# FASCICULE DE BREVET EUROPEEN

(11) **EP 3 531 735 B1**
(45) Date de publication et mention de la délivrance du brevet: **05.10.2022**
(21) Numéro de dépôt: 19156959.9
(22) Date de dépôt: 13.02.2019
(51) Int. Cl.: H04W 16/28, H04B 7/204, H04W 16/12, H04B 7/185

(54) **PROCEDE D'ALLOCATION DE FREQUENCES DANS UN SYSTEME DE RADIOCOMMUNICATION SATELLITAIRE MULTIFAISCEAUX, ET SYSTEME ASSOCIE**
VERFAHREN DER FREQUENZZUORDNUNG IN EINEM MEHRFACHSTRAHL-SATELLITENFUNKSYSTEM, UND ENTSPRECHENDES SYSTEM
METHOD FOR ALLOCATING FREQUENCIES IN A MULTI-BEAM SATELLITE RADIO COMMUNICATION SYSTEM, AND ASSOCIATED SYSTEM

(30) Priorité: 22.02.2018 FR 1800157
(43) Date de publication de la demande: 28.08.2019
(73) Titulaire: Institut National Polytechnique de Toulouse, 31029 Toulouse (FR); Thales, 92400 Courbevoie (FR); CENTRE NATIONAL D'ETUDES SPATIALES, 75039 Paris Cedex 01 (FR)
(72) Inventeur: BAUDOIN, Cédric, 31100 Toulouse (FR); COUBLE, Yoann, 31500 Toulouse (FR); DELEU, Thibault, 31100 Toulouse (FR); DUPE, Jean-Baptiste, 31401 Toulouse cedex 9 (FR); CHAPUT, Emmanuel, 31071 Toulouse cedex 7 (FR)
(74) Mandataire: Atout PI Laplace

(56) Documents cités:
- EP-A1- 3 018 836
- EP-A1- 3 082 275
- EP-A1- 3 182 614
- US-A1- 2017 294 996

## Description

L'invention porte sur un procédé d'allocation de fréquences dans un système de radiocommunication satellitaire multifaisceaux, et un système associé.

Les satellites actuels de radiocommunications à débit élevé offrent des capacités de transmission élevées, de l'ordre de la centaine de Gbps (100 à 600 Gbps), grâce à l'utilisation de faisceaux ou pinceaux fins d'antenne, combinée à une réutilisation spatiale des ressources fréquentielles dans une large bande fixée et à une stratégie efficace de modulation et de codage adaptatifs des canaux de transmission.

L'optimisation de la capacité de transmission est un enjeu majeur, et les techniques de réutilisation de fréquences en sont un élément clé.

Il est connu des techniques de réutilisation de fréquences communément appelées schéma de colorisation à deux couleurs, à quatre couleurs ou de réutilisation fractionnée de fréquences d'acronyme FFR pour "Fractional Frequency Reuse" en langue anglaise.

Parmi les schémas classiques de réutilisation de fréquences, le schéma qui correspond à une allocation de quatre sous-bandes distinctes sur l'ensemble des cellules ou spots de couverture de l'antenne multifaisceaux suivant un motif à quatre couleurs est bien connu. Un schéma de réutilisation de fréquences à quatre couleurs, désigné par l'acronyme 4-FR pour acronyme de "4 colours Frequency" en langue anglaise, divise la totalité de la bande de fréquences allouée au système en quatre sous-bandes de fréquences distinctes. Une couleur correspond à une sous-bande et une polarisation associée (parmi les deux polarisations possibles: sens horaire PH et anti-horaire PAH).

Un schéma de colorisation à 4 couleurs 4-FR laisse des faisceaux adjacents de l'antenne satellite d'émission ou de réception, émettre sur les différentes sous-bandes suivant une voie allant depuis le satellite vers le sol, ou recevoir sur les différentes sous-bandes suivant une voie retour depuis le sol vers le satellite. Un schéma de réutilisation de fréquences à quatre couleurs 4-FR permet d'avoir une distance minimale inter-faisceaux constantes entre des faisceaux de même couleur, et en conséquence d'obtenir un compromis raisonnable entre le facteur de réutilisation de la bande de fréquences et l'isolation entre les faisceaux pour limiter les interférences.

Il est également connu un schéma de réutilisation de fréquences à deux couleurs, qui conduit à des niveaux d'interférents très élevés.

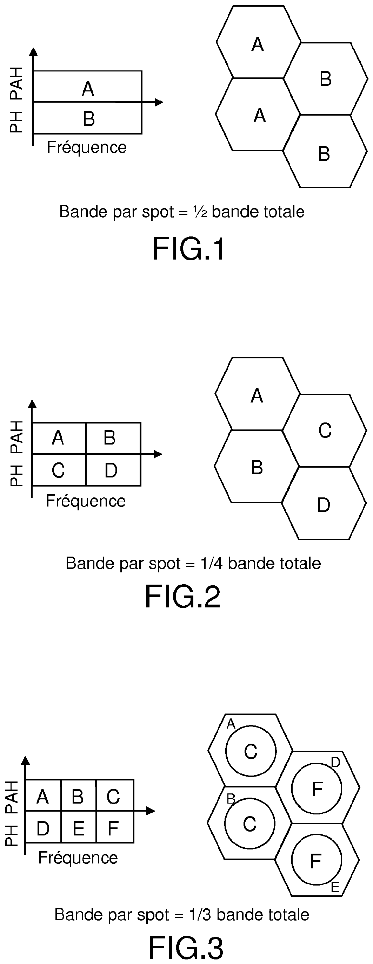

Les figures 1, 2 et 3 représentent respectivement les plans de fréquences pour un schéma de colorisation à deux couleurs, à quatre couleurs et de réutilisation fractionnée de fréquences FFR.

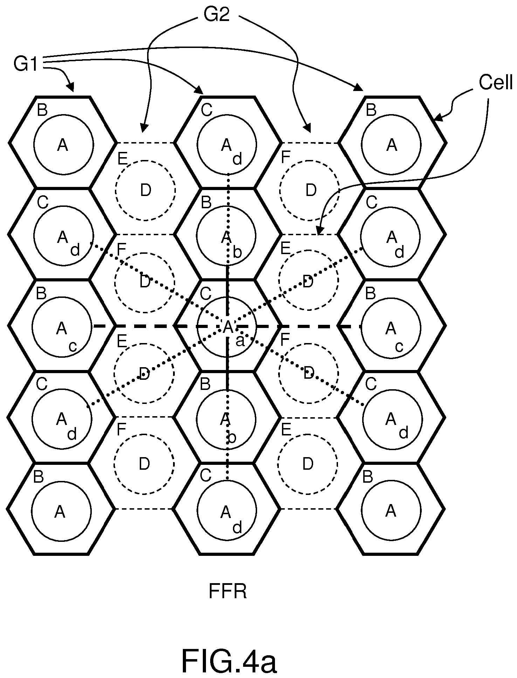

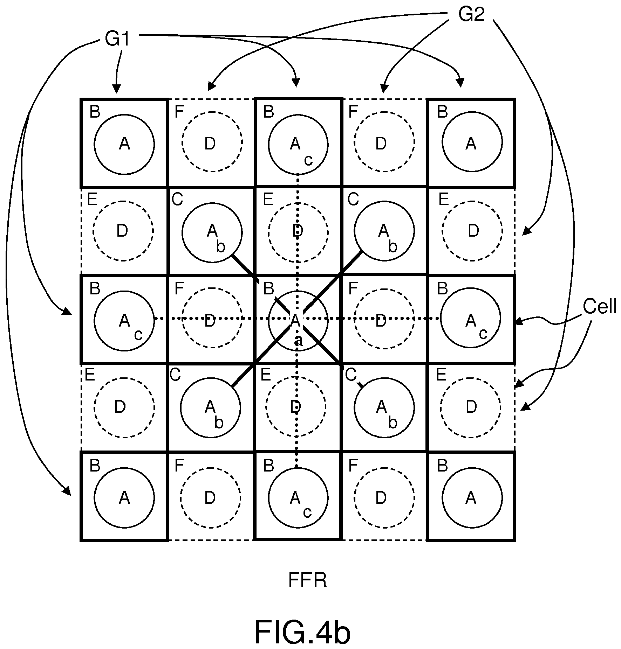

Tel qu'illustré sur les figures 4a et 4b, il est également connu un schéma de réutilisation de fréquences dit FFR pour "Fractional Frequency Reuse" en langue anglaise en langue anglaise, à 4 couleurs (on mélange du 4 couleurs en bordure de spot à 2 couleurs en centre de spot (qui n'est que la réunion des 2 couleurs de même polarisation d'une polarisation d'un schéma 4 couleurs) dans lequel une sous-bande commune à toutes les cellules est allouée à une zone interne de chaque cellule Cell.

La figure 4a correspond à des cellules hexagonales, et la figure 4b correspond à des cellules carrées.

Un premier état de polarisation et un deuxième état de polarisation sont respectivement alloués aux cellules d'une première grille G1 et aux cellules d'une deuxième grille G2.

Les cellules de la première grille G1 ont une couleur A allouée à une zone interne centrale de chaque cellule, et deux autres couleurs B et C respectivement allouées à l'autre partie non centrale de chaque cellule, de manière à ce que deux cellules contiguës de la première grille G1 n'aient pas la même couleur B ou C dans leur partie externe respective.

De manière similaire, les cellules de la deuxième grille G2 ont une couleur D allouée à une zone interne centrale de chaque cellule, et deux autres couleurs E et F respectivement allouées à l'autre partie non centrale de chaque cellule, de manière à ce que deux cellules contiguës de la deuxième grille G2 n'aient pas la même couleur E ou F dans leur partie externe respective.

Les couleurs A, B, C et D, E, F correspondent généralement au même découpage en sous-bandes de fréquences, seules les polarisations sont différentes.

Sur la figure 4a, à cellules hexagonales, on prend pour référence la partie centrale indicée a d'une cellule, qui a pour interférents importants les parties centrales indicées b de deux cellules, pour interférents moins importants les parties centrales indicées c de deux cellules, et pour interférents encore moins importants les parties centrales indicées d de quatre cellules.

Sur la figure 4b, à cellules carrées, on prend pour référence la partie centrale indicée a d'une cellule, qui a pour interférents importants les parties centrales indicées b de quatre cellules, et pour interférents moins importants les parties centrales indicées c de quatre cellules.

Les documents EP3082275.A1 et EP3182614.A.1 divulguent des exemples de découpages en sous-bandes de fréquences utilisant des polarisations différentes.

Un but de l'invention est de pallier les problèmes précédemment cités, et notamment de limiter les interférents, avec un taux amélioré de réutilisation de fréquences.

Il est proposé, selon un aspect de l'invention, un procédé d'allocation de fréquences dans un système de radiocommunication satellitaire multifaisceaux, dans lequel :
- une zone géographique de service couverte par le système est décomposée en une pluralité de cellules hexagonales ou carrées, réparties en une première grille et une deuxième grille de cellules, les cellules de la première grille et les cellules de la deuxième grille étant respectivement associées à des polarisation inverses des signaux de transmissions ;
- une cellule est décomposée en deux parties géographiquement distinctes, égales et symétriques suivant un axe de symétrie perpendiculaire à l'axe d'alignement des cellules contigües de la même grille, une partie étant respectivement associée à une couleur correspondant à une sous-bande de fréquences et à la polarisation de la grille à laquelle elle appartient, la bande de fréquences totale étant décomposée en trois sous-bandes de fréquences ; et
- deux parties superposables de cellule contigües d'une même grille sont associées à des couleurs différentes.

Une telle allocation de fréquences, de complexité limitée, permet d'améliorer la capacité de la voie retour des systèmes multispots ou multicellules, et on maximise les distances entre cellules interférentes.

Dans un mode de réalisation, les sous-bandes de fréquences sont de même largeur, correspondant à un tiers de la largeur de bande de fréquences totale.

Ainsi, par rapport à un schéma FFR, on minimise la bande de fréquences utilisée : dans chaque cellule 2/3 de la bande de fréquences est utilisée, là où un schéma FFR utiliserait toute la bande de fréquences.

Selon un autre aspect de l'invention, il est également proposé un système d'allocation de fréquences dans un système de radiocommunication satellitaire multifaisceaux, configuré pour mettre en œuvre le procédé selon la description précédente.

L'invention sera mieux comprise à l'étude de quelques modes de réalisation décrits à titre d'exemples nullement limitatifs et illustrés par les dessins annexés sur lesquels :
- les figures 1, 2 et 3 représentent schématiquement les plans de fréquences pour un schéma de colorisation à deux couleurs, à quatre couleurs et de réutilisation fractionnée de fréquences FFR, selon l'état de la technique ;
- la figure 4a illustre schématiquement une colorisation FFR à cellules hexagonales, selon l'état de la technique ;
- la figure 4b illustre schématiquement une colorisation FFR à cellules carrées, selon l'état de la technique ;
- la figure 5a illustre schématiquement une colorisation à cellules hexagonales, selon un aspect de l'invention ;
- la figure 5b illustre schématiquement une colorisation à cellules carrées, selon un aspect de l'invention ; et
- la figure 6 illustre schématiquement le plan de fréquences pour un schéma de colorisation selon la figure 5a, selon un aspect de l'invention.

Sur l'ensemble des figures, les éléments ayant des références identiques sont similaires.

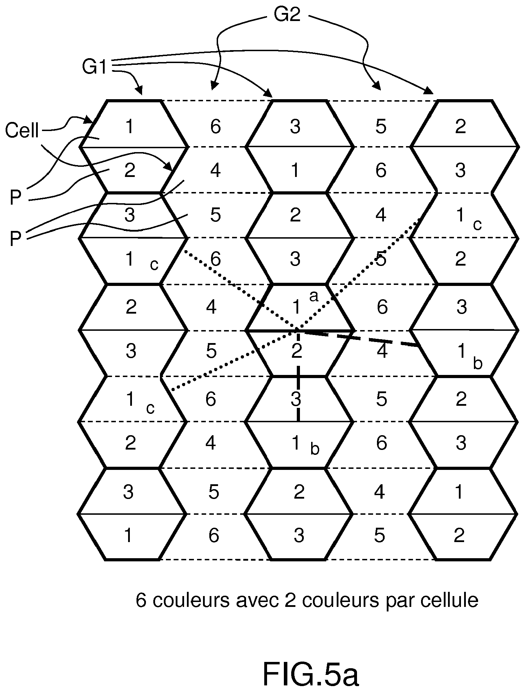

Sur la figure 5a, un premier état de polarisation et un deuxième état de polarisation sont respectivement alloués aux cellules d'une première grille G1 et aux cellules d'une deuxième grille G2.

Les cellules hexagonales de la première grille G1 sont toutes séparées, de manière identique, en deux parties P, par exemple égales. La bande de fréquences totale est décomposée en trois sous-bandes de fréquences, en l'espèce de même largeur de fréquences. Trois couleurs 1, 2, et 3 sont allouées pour la première grille G1 correspondant à un premier état de polarisation. Chaque partie P de cellule Cell de la première grille G1 est associée à une des trois couleurs 1, 2 et 3, de sorte que deux parties de cellule contigües sont associées à des sous-bandes de fréquences différentes.

De manière similaire, les cellules hexagonales de la deuxième grille G2 sont toutes séparées, de manière identique, en deux parties P, par exemple égales. La bande de fréquences totale est décomposée en trois sous-bandes de fréquences, en l'espèce de même largeur de fréquences, et identiques à la décomposition faite pour la première grille G1. Trois couleurs 4, 5, et 6 sont allouées pour la deuxième grille G2 correspondant à un deuxième état de polarisation, inverse de celui de la première grille G1. Chaque partie P de cellule Cell de la deuxième grille G2 est associée à une des trois couleurs 4, 5 et 6, de sorte que deux parties de cellule contigües sont associées à des sous-bandes de fréquences différentes.

Les couleurs 1, 2, 3 et 4, 5, 6 correspondent généralement au même découpage en sous-bandes de fréquences, seules les polarisations sont différentes.

Comme illustré sur la figure 5a, en comparaison avec la colorisation FFR hexagonales de la figure 4a, le schéma de colorisation selon l'invention à cellules hexagonales permet de minimiser les interférents, i.e. d'augmenter les distances entre les zones interférentes, et permet de diminuer la bande de fréquences à traiter (2/3 de la bande de fréquences du schéma FFR).

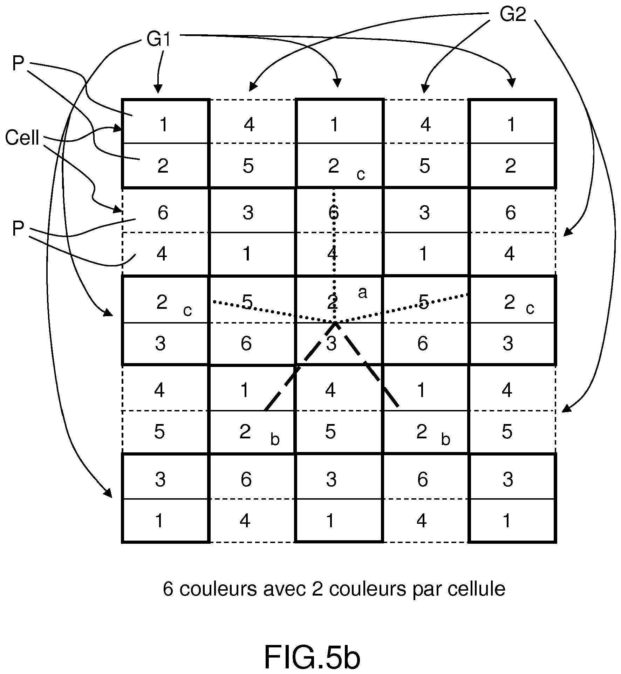

Sur la figure 5b, un premier état de polarisation et un deuxième état de polarisation sont respectivement alloués aux cellules d'une première grille G1 et aux cellules d'une deuxième grille G2.

Les cellules carrées de la première grille G1 sont toutes séparées, de manière identique, en deux parties P, par exemple égales. La bande de fréquences totale est décomposée en trois sous-bandes de fréquences, en l'espèce de même largeur de fréquences. Trois couleurs 1, 2, et 3 sont allouées pour la première grille G1 correspondant à un premier état de polarisation. Chaque partie P de cellule Cell de la première grille G1 est associée à une des trois couleurs 1, 2 et 3, de sorte que deux parties de cellule contigües sont associées à des sous-bandes de fréquences différentes.

De manière similaire, les cellules carrées de la deuxième grille G2 sont toutes séparées, de manière identique, en deux parties P, par exemple égales. La bande de fréquences totale est décomposée en trois sous-bandes de fréquences, en l'espèce de même largeur de fréquences, et identiques à la décomposition faite pour la première grille G1. Trois couleurs 4, 5, et 6 sont allouées pour la deuxième grille G2 correspondant à un deuxième état de polarisation, inverse de celui de la première grille G1. Chaque partie P de cellule Cell de la deuxième grille G2 est associée à une des trois couleurs 4, 5 et 6, de sorte que deux parties de cellule contigües sont associées à des sous-bandes de fréquences différentes.

Les couleurs 1, 2, 3 et 4, 5, 6 correspondent généralement au même découpage en sous-bandes de fréquences, seules les polarisations sont différentes.

Comme illustré sur la figure 5b, en comparaison avec la colorisation FFR carrées de la figure 4b, le schéma de colorisation selon l'invention à cellules carrées permet de minimiser les interférents, i.e. d'augmenter les distances entre les zones interférentes, et permet de diminuer la bande de fréquences à traiter (2/3 de la bande de fréquences du schéma FFR), i.e. d'augmenter la capacité.

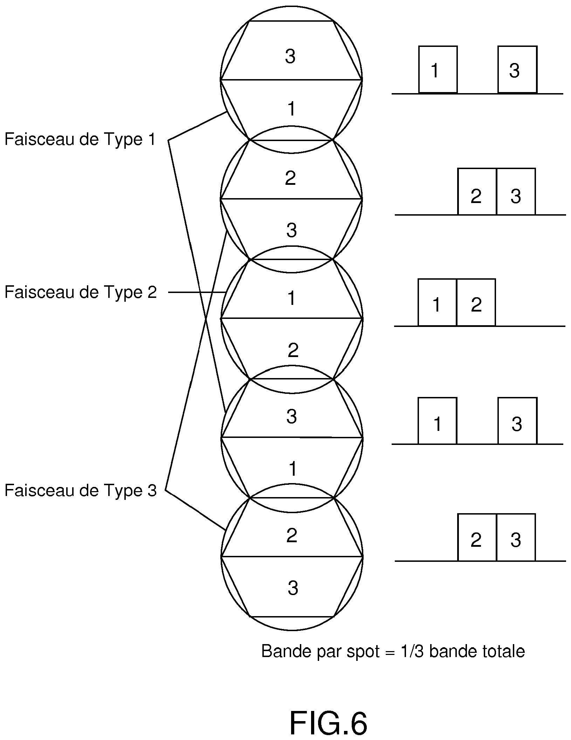

La figure 6 représente le plan de fréquences pour un schéma de colorisation selon la figure 5a.

## Revendications

1. Procédé d'allocation de fréquences dans un système de radiocommunication satellitaire multifaisceaux, dans lequel :
- une zone géographique de service couverte par le système est décomposée en une pluralité de cellules (Cell) hexagonales ou carrées, réparties en une première grille (G1) et une deuxième grille (G2) de cellules, les cellules de la première grille (G1) et les cellules de la deuxième grille (G2) étant respectivement associées à des polarisation inverses des signaux de transmissions ;
- une cellule (Cell) est décomposée en deux parties (P) géographiquement distinctes, égales et symétriques suivant un axe de symétrie perpendiculaire à l'axe d'alignement des cellules contigües de la même grille, une partie étant respectivement associée à une couleur (1, 2, 3, 4, 5, 6) correspondant à une sous-bande de fréquences et à la polarisation de la grille (G1, G2) à laquelle elle appartient, la bande de fréquences totale étant décomposée en trois sous-bandes de fréquences ; et
- deux parties (P) de cellule contigües d'une même grille sont associées à des couleurs différentes.

2. Procédé selon la revendication précédente, dans lequel les sous-bandes de fréquences sont de même largeur, correspondant à un tiers de la largeur de bande de fréquences totale.

3. Système d'allocation de fréquences dans un système de radiocommunication satellitaire multifaisceaux, configuré pour mettre en œuvre le procédé selon l'une des revendications précédentes.

## Patentansprüche

1. Verfahren zur Frequenzzuordnung in einem mehrstrahligen Satelliten-Funkkommunikationssystem, wobei:
- ein geografischer Dienstbereich, welcher durch das System abgedeckt wird, in eine Vielzahl von sechseckigen oder quadratischen Zellen (Cell) zerlegt ist, welche zu einem ersten Gitter (G1) und einem zweiten Gitter (G2) von Zellen verteilt sind, wobei die Zellen des ersten Gitters (G1) und die Zellen des zweiten Gitters (G2) jeweils umgekehrten Polarisationen der Übertragungssignale zugewiesen sind;
- eine Zelle (Cell) in zwei geografisch unterschiedliche Teile (P) zerlegt ist, welche gleich und symmetrisch gemäß einer Symmetrieachse sind, welche rechtwinklig zur Ausrichtungsachse der aneinandergrenzenden Zellen des gleichen Gitters sind, wobei ein Teil jeweils einer Farbe (1, 2, 3, 4, 5, 6) zugewiesen ist, welche einem Frequenzteilband und der Polarisation des Gitters (G1, G2), zu dem sie gehört, entspricht, wobei das Gesamtfrequenzband in drei Frequenzteilbänder zerlegt ist; und
- zwei Teile (P) von aneinandergrenzenden Zellen eines gleichen Gitters unterschiedlichen Farben zugewiesen sind.

2. Verfahren nach dem vorhergehenden Anspruch, wobei die Frequenzteilbänder die gleiche Breite aufweisen, welche einem Drittel der Gesamtfrequenzbandbreite entspricht.

3. Frequenzzuordnungssystem in einem mehrstrahligen Satelliten-Funkkommunikationssystem, welches dazu konfiguriert ist, um das Verfahren nach einem der vorhergehenden Ansprüche zu implementieren.

## Claims

1. A method for allocating frequencies in a multibeam satellite radiocommunications system, wherein:
- a geographical service zone covered by the system is broken down into a plurality of hexagonal or square cells (Cell), distributed into a first grid (G1) and a second grid (G2) of cells, the cells of the first grid (G1) and the cells of the second grid (G2) being respectively associated with opposing polarisations of the transmission signals;
- a cell (Cell) is broken down into two parts (P), geographically distinct, equal and symmetrical along an axis of symmetry perpendicular to the axis of alignment of the contiguous cells of the same grid, one part being respectively associated with a colour (1, 2, 3, 4, 5, 6) corresponding to a frequency sub-band and to the polarisation of the grid (G1, G2) to which it belongs, the total frequency band being broken down into three frequency sub-bands; and
- two contiguous cell parts (P) of one and the same grid are associated with different colours.

2. The method according to the preceding claim, wherein the frequency sub-bands are of the same width, corresponding to a third of the total frequency bandwidth.

3. A system for allocating frequencies in a multibeam satellite radiocommunications system, configured so as to implement the method according to any of the preceding claims.
